# EUROPEAN PATENT SPECIFICATION

(11) **EP 3 720 239 B1**
(45) Date of publication and mention of the grant of the patent: **20.10.2021**
(21) Application number: 17933215.0
(22) Date of filing: 29.11.2017
(51) Int. Cl.: H04W 76/18, H04W 76/19, H04W 74/08

(54) **RADIO LINK STATUS DETERMINATION METHOD AND RADIO LINK STATUS DETERMINATION DEVICE**
VERFAHREN ZUR BESTIMMUNG DES FUNKVERBINDUNGSSTATUS UND VORRICHTUNG ZUR BESTIMMUNG DES FUNKVERBINDUNGSSTATUS
PROCÉDÉ ET DISPOSITIF DE DÉTERMINATION D'ÉTAT DE LIAISON RADIO

(43) Date of publication of application: 07.10.2020
(73) Proprietor: Beijing Xiaomi Mobile Software Co., Ltd., Beijing 100085 (CN)
(72) Inventor: JIANG, Xiaowei, Beijing 100085 (CN)
(74) Representative: dompatent von Kreisler Selting Werner - Partnerschaft von Patent- und Rechtsanwälten mbB
(86) International application number: PCT/CN2017/113660
(87) International publication number: WO 2019/104561

(56) References cited:
- WO-A1-2016/019493
- CN-A- 102 870 450
- CN-A- 106 797 571
- US-A1- 2016 309 394
- "3rd Generation Partnership Project; Technical Specification Group Radio Access Network; NR; NR and NG-RAN Overall Description; Stage 2 (Release 15)", 3GPP STANDARD; TECHNICAL SPECIFICATION; 3GPP TS 38.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V1.2.1, 17 November 2017 (2017-11-17), pages 1-56, XP051391742, [retrieved on 2017-11-17]
- "3rd Generation Partnership Project; Technical Specification Group Radio Access Network; NR; Radio Resource Control (RRC); Protocol specification (Release 15)", 3GPP STANDARD; TECHNICAL SPECIFICATION; 3GPP TS 38.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V0.1.0, 21 November 2017 (2017-11-21), pages 1-154, XP051450269, [retrieved on 2017-11-21]
- HUAWEI ET AL: "RLF for NR", 3GPP DRAFT; R2-1706745 RLF FOR NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Qingdao, China; 20170627 - 20170629 26 June 2017 (2017-06-26), XP051301244, Retrieved from the Internet: URL:http://www.3gpp.org/ftp/Meetings_3GPP_ SYNC/RAN2/Docs/ [retrieved on 2017-06-26]
- SAMSUNG: "Connected mode aspects of supplementary uplink frequency", 3GPP TSG-RAN WG2 #99bis, R2-1711808, 13 October 2017 (2017-10-13), XP051343764,

## Description

### TECHNICAL FIELD

The present application generally relates to the technical field of communications, and more particularly, to a method for determining radio link status and a device for determining radio link status.

### BACKGROUND

In long term evolution (LTE) system, user equipment may monitor a radio link condition of a cell and perform processing in case of a radio link failure (RLF) of a carrier of the cell.

In new radio (NR), a supplement uplink (SUL) carrier is introduced to enhance uplink coverage. Moreover, the SUL carrier does not independently correspond to a cell but is paired with a non-SUL carrier for correspondence to a cell.

However, a conventional radio link monitoring (RLM) manner in LTE system is not suitable to a cell configured with the SUL carrier.

Related technologies are known from "3rd Generation Partnership Project; Technical Specification Group Radio Access Network; TS 38.300", "3rd Generation Partnership Project; Technical Specification Group Radio Access Network; TS 38.331" and "3GPP DRAFT; R2-1706745 RLF FOR NR, 3RD GEI SOPHIA-ANTIPOLIS CEDEX".

### SUMMARY

In view of this, the present disclosure discloses a method for determining radio link status and a device for determining radio link status.

The features of the method and device for determining radio link status according to the present disclosure are defined in the independent claims, and the preferable features according to the present invention are defined in the dependent claims.

According to the embodiments of the present disclosure, whether the RLF occurs to the SUL carrier and whether the RLF occurs to the non-SUL carrier may be determined for the cell configured with the SUL carrier respectively, and a determination result of the SUL carrier and a determination result of the non-SUL carrier may be integrated to determine whether the RLF occurs to the cell configured with the SUL carrier to further ensure that user equipment may accurately determine whether the RLF occurs to the cell configured with the SUL carrier for appropriate processing to ensure a good communication effect.

### BRIEF DESCRIPTION OF THE DRAWINGS

In order to describe the technical solutions in the embodiments of the present application more clearly, the accompanying drawings required to be used for descriptions about the embodiments will be simply introduced below. It is apparent that the accompanying drawings described below are only some embodiments of the present application. Those of ordinary skill in the art may further obtain other accompanying drawings according to these accompanying drawings without creative work.
FIG. 1 is a schematic flow chart showing a method for determining radio link status, according to the invention.
FIG. 2 is a schematic flow chart showing determination of an RLF, according to an embodiment of the present disclosure.
FIG. 3 is another schematic flow chart showing determination of an RLF, according to an embodiment of the present disclosure.
FIG. 4 is another schematic flow chart showing determination of an RLF, according to an embodiment of the present disclosure.
FIG. 5 is another schematic flow chart showing determination of an RLF, according to an embodiment of the present disclosure.
FIG. 6 is another schematic flow chart showing determination of an RLF, according to an embodiment of the present disclosure.
FIG. 7 is another schematic flow chart showing determination of an RLF, according to an embodiment of the present disclosure.
FIG. 8 is another schematic flow chart showing determination of an RLF, according to an embodiment of the present disclosure.
FIG. 9 is another schematic flow chart showing determination of an RLF, according to an embodiment of the present disclosure.
FIG. 10 is a schematic flow chart showing initiation of a connection reestablishment flow and/or transmission of information of an RLF to a base station, according to an embodiment of the present disclosure.
FIG. 11 is a schematic flow chart showing initiation of a connection reestablishment flow and/or transmission of information of an RLF to a base station, according to the invention.
FIG. 12 is a schematic flow chart showing another method for determining radio link status, according to an embodiment of the present disclosure.
FIG. 13 is a schematic block diagram of a device for determining radio link status, according to an embodiment of the present disclosure.
FIG. 14 is a schematic block diagram of a determination module, according to an embodiment of the present disclosure.
FIG. 15 is a schematic block diagram of another determination module, according to an embodiment of the present disclosure.
FIG. 16 is a schematic block diagram of another determination module, according to an embodiment of the present disclosure.
FIG. 17 is a schematic block diagram of another determination module, according to an embodiment of the present disclosure.
FIG. 18 is a schematic block diagram of a processing module, according to an embodiment of the present disclosure.
FIG. 19 is a schematic block diagram of another processing module, according to an embodiment of the present disclosure.
FIG. 20 is a schematic block diagram of another device for determining radio link status, according to an embodiment of the present disclosure.
FIG. 21 is a schematic block diagram of a device for determining radio link status, according to an exemplary embodiment.

### DETAILED DESCRIPTION

The technical solutions in the embodiments of the present application will be clearly and completely described below in combination with the accompanying drawings in the embodiments of the present application. It is apparent that the described embodiments are not all embodiments but only part of embodiments of the present application. All other embodiments obtained by those of ordinary skill in the art based on the embodiments in the present application without creative work shall fall within the scope of protection of the present application.

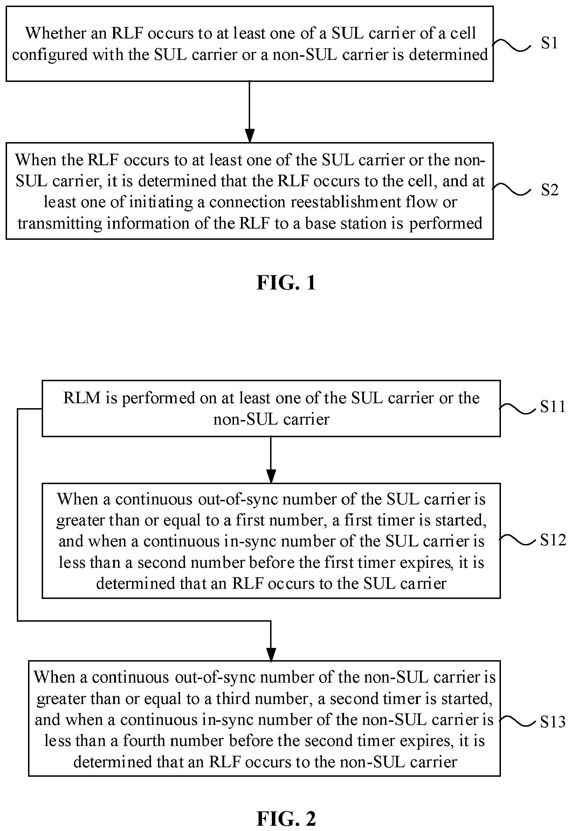

FIG. 1 is a schematic flow chart showing a method for determining radio link status, according to the invention. The method for determining radio link status in the embodiment may be applied to user equipment, for example, a mobile phone, a tablet computer, a wearable device, and the like. As illustrated in FIG. 1, the method for determining radio link status may include the following steps.

In S1, whether an RLF occurs to at least one of a SUL carrier of a cell configured with the SUL carrier or a non-SUL carrier is determined.

In an embodiment, for the SUL carrier and the non-SUL carrier, whether the RLF occurs may be determined respectively.

Take the SUL carrier as an example, an out-of-sync number and in-sync number of the SUL carrier may be monitored to determine whether the RLF occurs to the SUL carrier, or whether random access initiated to the SUL carrier fails may be judged to determine whether the RLF occurs to the SUL carrier.

Take the non-SUL carrier as an example, an out-of-sync number and in-sync number of the non-SUL carrier may be monitored to determine whether the RLF occurs to the non-SUL carrier, or whether random access initiated to the non-SUL carrier fails may be judged to determine whether the RLF occurs to the non-SUL carrier.

The above manner of monitoring the out-of-sync number and the in-sync number to determine whether the RLF occurs and the above manner of judging whether the random access fails to determine whether the RLF occurs will be described in the following embodiments in detail.

In an embodiment, a lower limit value of a band corresponding to the SUL carrier may be less than a lower limit value of a band corresponding to the non-SUL carrier, and an upper limit value of the band corresponding to the SUL carrier may be less than an upper limit value of the band corresponding to the non-SUL carrier.

In S2, when the RLF occurs to at least one of the SUL carrier or the non-SUL carrier, it is determined that the RLF occurs to the cell, and at least one of initiating a connection reestablishment flow or transmitting information of the RLF to a base station is performed.

In an embodiment, under the circumstance that the RLF occurs to the SUL carrier, it may be determined that the RLF occurs to the cell configured with the SUL carrier.

In an embodiment, under the circumstance that the RLF occurs to the non-SUL carrier, it may be determined that the RLF occurs to the cell configured with the SUL carrier.

In an embodiment, under the circumstance that the RLF occurs to the SUL carrier and the RLF occurs to the non-SUL carrier, it may be determined that the RLF occurs to the cell configured with the SUL carrier.

In an embodiment, under a normal circumstance, when it is determined that the RLF occurs to the cell, it is determined to initiate the connection reestablishment flow, or transmit the information of the RLF to the base station, or not only initiate the connection reestablishment flow but also transmit the information of the RLF to the base station according to whether the cell is a PCell or a PSCell.

Based on the embodiment illustrated in FIG. 1, whether the RLF occurs to the SUL carrier and whether the RLF occurs to the non-SUL carrier may be determined for the cell configured with the SUL carrier respectively, and a determination result of the SUL carrier and a determination result of the non-SUL carrier may be integrated to determine whether the RLF occurs to the cell configured with the SUL carrier, so as to further ensure that the user equipment may accurately determine whether the RLF occurs to the cell configured with the SUL carrier, perform appropriate processing and ensure a good communication effect.

FIG. 2 is a schematic flow chart showing determination of an RLF, according to an embodiment of the present disclosure. As illustrated in FIG. 2, based on the embodiment illustrated in FIG. 1, the operation that the at least one of whether the RLF occurs to the SUL carrier of the cell configured with the SUL carrier or whether the RLF occurs to the non-SUL carrier is determined includes the following steps.

In S11, RLM is performed on the at least one of the SUL carrier or the non-SUL carrier.

In S12, when a continuous out-of-sync number of the SUL carrier is greater than or equal to a first number, a first timer is started, and when a continuous in-sync number of the SUL carrier is less than a second number before the first timer expires, it is determined that the RLF occurs to the SUL carrier; and/or
in S13, when a continuous out-of-sync number of the non-SUL carrier is greater than or equal to a third number, a second timer is started, and when a continuous in-sync number of the non-SUL carrier is less than a fourth number before the second timer expires, it is determined that the RLF occurs to the non-SUL carrier.

In an embodiment, a relationship of the first number, the second number, the third number and the fourth number may be set as required. For example, two of the four numbers may be set to be the same, or all the four numbers may be set to be different.

In an embodiment, the RLM is performed on the at least one of the SUL carrier or the non-SUL carrier.

Take the SUL carrier as an example, a physical layer may indicate the monitored continuous out-of-sync number OOS1 of the SUL carrier, and when OOS1 is greater than or equal to the first number, the timer may be started for timing. During timing of the timer, the SUL carrier is continued to be monitored, the physical layer may indicate the monitored continuous in-sync number IS1 of the SUL carrier, and when the number IS1 is less than the second number before the timer expires, it is determined that the RLF occurs to the SUL carrier.

Take the non-SUL carrier as an example, the physical layer may indicate the monitored continuous out-of-sync number OOS2 of the non-SUL carrier, and when OOS2 is greater than or equal to the third number, the timer may be started for timing. During timing of the timer, the non-SUL carrier is continued to be monitored, the physical layer may indicate the monitored continuous in-sync number IS2 of the non-SUL carrier, and when the number IS2 is less than the fourth number before the timer expires, it is determined that the RLF occurs to the non-SUL carrier.

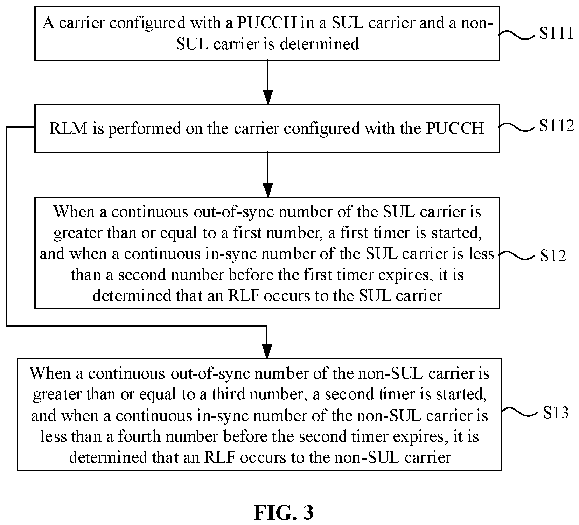

FIG. 3 is another schematic flow chart showing determination of an RLF, according to an embodiment of the present disclosure. As illustrated in FIG. 3, based on the embodiment illustrated in FIG. 2, the operation that the RLM is performed on the at least one of the SUL carrier or the non-SUL carrier includes the following steps.

In S111, a carrier configured with a PUCCH in the SUL carrier and the non-SUL carrier is determined.

In S112, the RLM is performed on the carrier configured with the PUCCH.

In an embodiment, only the carrier configured with the PUCCH in the SUL carrier and the non-SUL carrier may be monitored.

When no RLF occurs to the carrier configured with the PUCCH, the user equipment may transmit acknowledgement (ACK)/negative acknowledgement (NACK), channel quality indicator (CQI), precoding matrix indicator (PMI), rank indication (RI) and other information through the PUCCH, thereby implementing communication to a certain extent.

Therefore, only the carrier configured with the PUCCH is monitored, whether the RLF occurs to the carrier configured with the PUCCH is determined, and under the circumstance that the RLF occurs to the carrier configured with the PUCCH, processing may be performed (for example, S2 is executed) for communication. In such case, the carrier which is not configured with any PUCCH is not required to be monitored, and resources, occupied by a monitoring operation, of the user equipment are reduced.

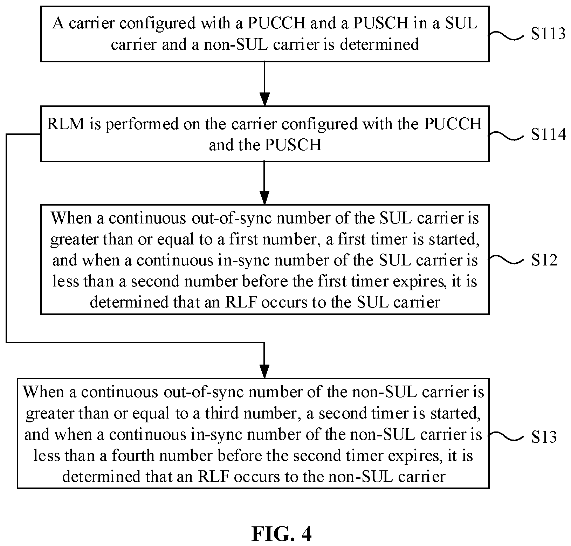

FIG. 4 is another schematic flow chart showing determination of an RLF, according to an embodiment of the present disclosure. As illustrated in FIG. 4, based on the embodiment illustrated in FIG. 2, the operation that the RLM is performed on the at least one of the SUL carrier or the non-SUL carrier includes the following steps.

In S113, a carrier configured with a PUCCH and a PUSCH in the SUL carrier and the non-SUL carrier is determined.

In S114, the RLM is performed on the carrier configured with the PUCCH and the PUSCH.

In an embodiment, only the carrier configured with the PUCCH and the PUSCH in the SUL carrier and the non-SUL carrier may be monitored.

When no RLF occurs to the carrier configured with the PUCCH and the PUSCH, the user equipment may transmit ACK/NACK, CQI, PMI, RI and other information through the PUCCH and transmit data through the PUSCH, thereby implementing normal communication.

Therefore, only the carrier configured with the PUCCH and the PUSCH is monitored, whether the RLF occurs to the carrier configured with the PUCCH and the PUSCH is determined, and under the circumstance that the RLF occurs to the carrier configured with the PUCCH and the PUSCH, processing may be performed (for example, S2 is executed) to ensure normal communication. In such case, the carrier which is not configured with either PUCCH or PUSCH is not required to be monitored, and resources, occupied by a monitoring operation, of the user equipment are reduced.

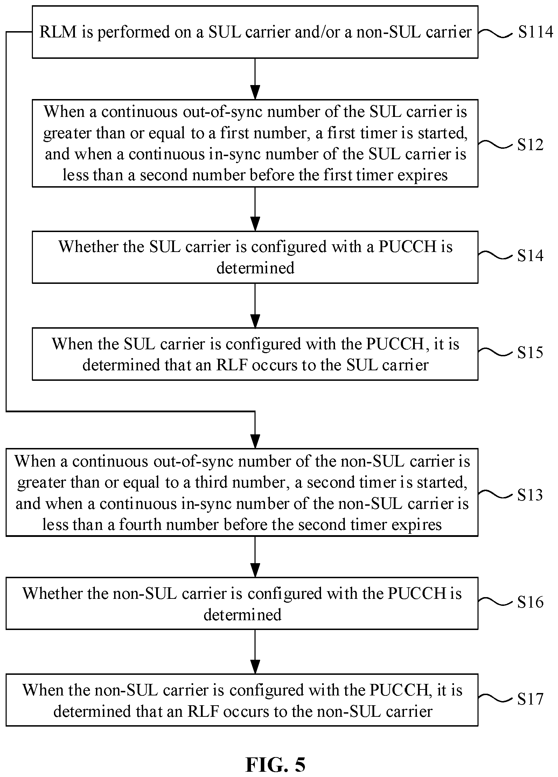

FIG. 5 is another schematic flow chart showing determination of an RLF, according to an embodiment of the present disclosure. As illustrated in FIG. 5, based on the embodiment illustrated in FIG. 2, when the continuous in-sync number of the SUL carrier is less than the second number, the operation that the at least one of whether the RLF occurs to the SUL carrier of the cell configured with the SUL carrier or whether the RLF occurs to the non-SUL carrier is determined further includes the following steps:

In S14, whether the SUL carrier is configured with a PUCCH is determined;

In S15, when the SUL carrier is configured with the PUCCH, it is determined that the RLF occurs to the SUL carrier; and /or
when the continuous in-sync number of the non-SUL carrier is less than the fourth number, the operation that the at least one of whether the RLF occurs to the SUL carrier of the cell configured with the SUL carrier or whether the RLF occurs to the non-SUL carrier is determined further includes the following steps:

In S16, whether the non-SUL carrier is configured with the PUCCH is determined;

In S17, when the non-SUL carrier is configured with the PUCCH, it is determined that the RLF occurs to the non-SUL carrier.

In an embodiment, based on the embodiment illustrated in FIG. 2, for the SUL carrier, when the continuous in-sync number is less than the second number, whether the SUL carrier is configured with the PUCCH may further be determined, and under the circumstance that the SUL carrier is configured with the PUCCH, it is determined that the RLF occurs to the SUL carrier. Since communication of the user equipment may be influenced greatly only under the circumstance that the RLF occurs to the carrier configured with the PUCCH, for the SUL carrier which is not configured with the PUCCH, no processing may be performed (for example, S2 is not executed) even though the continuous in-sync number is less than the second number, thereby reducing occupied resources of the user equipment.

In an embodiment, based on the embodiment illustrated in FIG. 2, for the non-SUL carrier, when the continuous in-sync number is less than the fourth number, whether the non-SUL carrier is configured with the PUCCH may further be determined, and under the circumstance that the non-SUL carrier is configured with the PUCCH, it is determined that the RLF occurs to the non-SUL carrier. Since communication of the user equipment may be influenced greatly only under the circumstance that the RLF occurs to the carrier configured with the PUCCH, for the non-SUL carrier which is not configured with the PUCCH, no processing may be performed (for example, S2 is not executed) even though the continuous in-sync number is less than the fourth number, thereby reducing occupied resources of the user equipment.

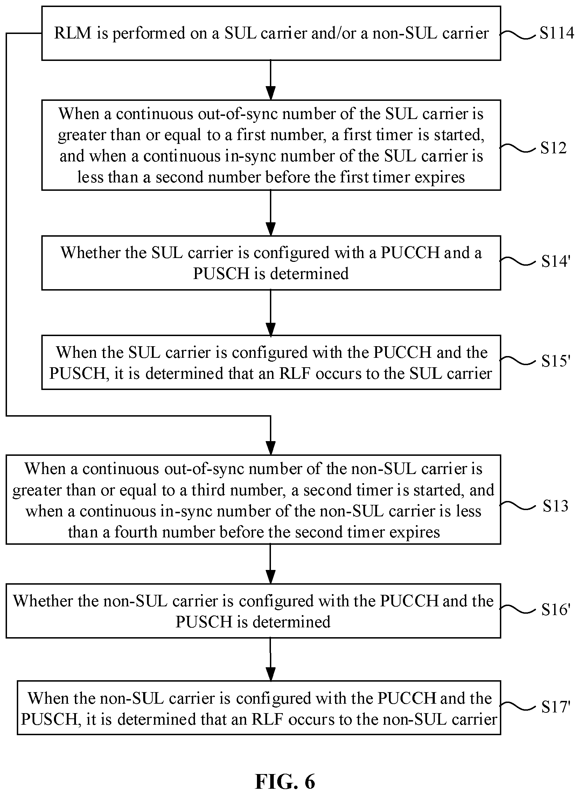

FIG. 6 is another schematic flow chart showing determination of an RLF, according to an embodiment of the present disclosure. As illustrated in FIG. 6, based on the embodiment illustrated in FIG. 2, when the continuous in-sync number of the SUL carrier is less than the second number, the operation that the at least one of whether the RLF occurs to the SUL carrier of the cell configured with the SUL carrier or whether the RLF occurs to the non-SUL carrier is determined further includes the following steps:

In S14', whether the SUL carrier is configured with a PUCCH and a PUSCH is determined;

In S15', when the SUL carrier is configured with the PUCCH and the PUSCH, it is determined that the RLF occurs to the SUL carrier; and/or

when the continuous in-sync number of the non-SUL carrier is less than the fourth number, the operation that the at least one of whether the RLF occurs to the SUL carrier of the cell configured with the SUL carrier or whether the RLF occurs to the non-SUL carrier is determined further includes the following steps:

In S16', whether the non-SUL carrier is configured with the PUCCH and the PUSCH is determined;

In S17', when the non-SUL carrier is configured with the PUCCH and the PUSCH, it is determined that the RLF occurs to the non-SUL carrier.

In an embodiment, based on the embodiment illustrated in FIG. 2, for the SUL carrier, when the continuous in-sync number is less than the second number, whether the SUL carrier is configured with the PUCCH and the PUSCH may further be determined, and under the circumstance that the SUL carrier is configured with the PUCCH and the PUSCH, it is determined that the RLF occurs to the SUL carrier. Since communication of the user equipment may be influenced greatly only under the circumstance that the RLF occurs to the carrier configured with the PUCCH and the PUSCH, for the SUL carrier which is not configured with the PUCCH and the PUSCH, no processing may be performed (for example, S2 is not executed) even though the continuous in-sync number is less than the second number, thereby reducing occupied resources of the user equipment.

In an embodiment, based on the embodiment illustrated in FIG. 2, for the non-SUL carrier, when the continuous in-sync number is less than the fourth number, whether the non-SUL carrier is configured with the PUCCH and the PUSCH may further be determined, and under the circumstance that the non-SUL carrier is configured with the PUCCH and the PUSCH, it is determined that the RLF occurs to the non-SUL carrier. Since communication of the user equipment may be influenced greatly only under the circumstance that the RLF occurs to the carrier configured with the PUCCH and the PUSCH, for the non-SUL carrier which is not configured with the PUCCH and the PUSCH, no processing may be performed (for example, S2 is not executed) even though the continuous in-sync number is less than the fourth number, thereby reducing occupied resources of the user equipment.

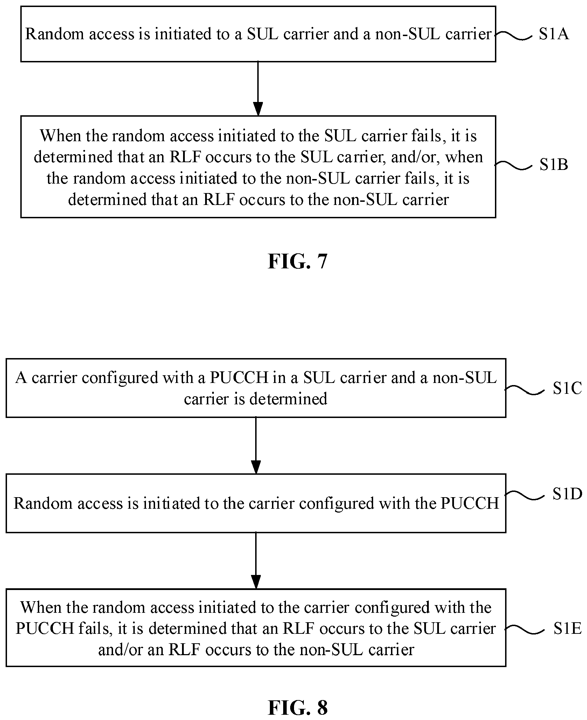

FIG. 7 is another schematic flow chart showing determination of an RLF, according to an embodiment of the present disclosure. As illustrated in FIG. 7, based on the embodiment illustrated in FIG. 1, the operation that the at least one of whether the RLF occurs to the SUL carrier of the cell configured with the SUL carrier or whether the RLF occurs to the non-SUL carrier is determined includes the following steps.

In S1A, random access is initiated to the SUL carrier and the non-SUL carrier.

In S1B, when the random access initiated to the SUL carrier fails, it is determined that the RLF occurs to the SUL carrier, and/or, when the random access initiated to the non-SUL carrier fails, it is determined that the RLF occurs to the non-SUL carrier.

In an embodiment, besides the monitoring manner for determining whether the RLF occurs to the carrier of the cell in the embodiment illustrated in FIG. 2, random access may also be initiated to the carrier of the cell to determine whether the RLF occurs to the carrier.

When the random access initiated to the SUL carrier fails, it may be determined that the RLF occurs to the SUL carrier, and when the random access initiated to the non-SUL carrier fails, it may be determined that the RLF occurs to the non-SUL carrier.

In an embodiment, the user equipment may select to initiate random access to the SUL carrier, or initiate random access to the non-SUL carrier, or initiate random access to the SUL carrier and the non-SUL carrier respectively according to a configuration of a base station side or a configuration of a user equipment side.

FIG. 8 is another schematic flow chart showing determination of an RLF, according to an embodiment of the present disclosure. As illustrated in FIG. 8, based on the embodiment illustrated in FIG. 1, the operation that the at least one of whether the RLF occurs to the SUL carrier of the cell configured with the SUL carrier or whether the RLF occurs to the non-SUL carrier is determined includes the following steps.

In S1C, a carrier configured with a PUCCH in the SUL carrier and the non-SUL carrier is determined.

In S1D, random access is initiated to the carrier configured with the PUCCH.

In S1E, when the random access initiated to the carrier configured with the PUCCH fails, it is determined that the RLF occurs to the at least one of the SUL carrier or the non-SUL carrier.

In an embodiment, the random access may be initiated to the carrier configured with the PUCCH in the SUL carrier and the non-SUL carrier only.

When no RLF occurs to the carrier configured with the PUCCH, the user equipment may transmit ACK/NACK, CQI, PMI, RI and other information through the PUCCH, thereby implementing communication to a certain extent.

Therefore, the random access is initiated to the carrier configured with the PUCCH only, whether the RLF occurs to the carrier configured with the PUCCH is determined, and under the circumstance that the RLF occurs to the carrier configured with the PUCCH, processing may be performed (for example, S2 is executed) so as to ensure communication to a certain extent. In such case, the random access is not required to be initiated to the carrier which is not configured with any PUCCH, and resources, occupied by an operation of initiating the random access, of the user equipment are reduced.

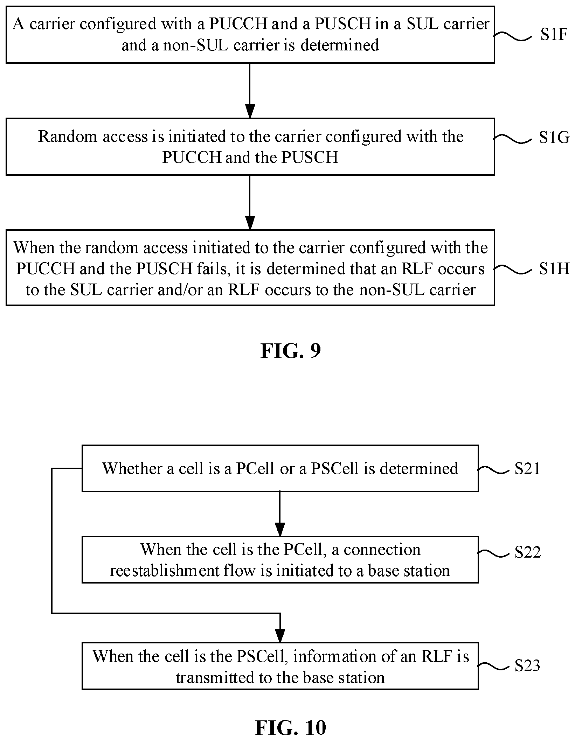

FIG. 9 is another schematic flow chart showing determination of an RLF, according to an embodiment of the present disclosure. As illustrated in FIG. 9, based on the embodiment illustrated in FIG. 1, the operation that the at least one of whether the RLF occurs to the SUL carrier of the cell configured with the SUL carrier or whether the RLF occurs to the non-SUL carrier is determined includes the following steps.

In S1F, a carrier configured with a PUCCH and a PUSCH in the SUL carrier and the non-SUL carrier is determined.

In S1G, random access is initiated to the carrier configured with the PUCCH and the PUSCH.

In S1H, when the random access initiated to the carrier configured with the PUCCH and the PUSCH fails, it is determined that the RLF occurs to the at least one of the SUL carrier or the non-SUL carrier.

In an embodiment, the random access may be initiated to the carrier configured with the PUCCH and the PUSCH in the SUL carrier and the non-SUL carrier only.

When no RLF occurs to the carrier configured with the PUCCH and the PUSCH, the user equipment may transmit ACK/NACK, CQI, PMI, RI and other information through the PUCCH and transmit data through the PUSCH, thereby implementing normal communication.

Therefore, the random access is initiated to the carrier configured with the PUCCH and the PUSCH only, whether the RLF occurs to the carrier configured with the PUCCH and the PUSCH is determined, and under the circumstance that the RLF occurs to the carrier configured with the PUCCH and the PUSCH, further processing may be performed (for example, S2 is executed) so as to ensure normal communication. In such case, the random access is not required to be initiated to the carrier which is not configured with either PUCCH or PUSCH. Therefore, user equipment resources, which are occupied by an operation of initiating the random access, are reduced.

FIG. 10 is a schematic flow chart showing initiation of a connection reestablishment flow and/or transmission of information of an RLF to a base station, according to an embodiment of the present disclosure. As illustrated in FIG. 10, based on the embodiment illustrated in FIG. 1, the operation that the at least one of initiating the connection reestablishment flow or transmitting information of the RLF to the base station is performed includes the following steps.

In S21, whether the cell is a PCell or a PSCell is determined.

In S22, when the cell is the PCell, the connection reestablishment flow is initiated to the base station.

In S23, when the cell is the PSCell, the information of the RLF is transmitted to the base station.

In an embodiment, when it is determined that the RLF occurs to the cell configured with the SUL carrier, whether the cell is the PCell or the PSCell may further be determined, and when the cell is the PCell, the connection reestablishment flow may be initiated to the base station to enable the base station to recover a radio link of the PCell and ensure communication of the user equipment; and when the cell is the PSCell, the user equipment may still communicate through the radio link of the PCell, so that the information of the RLF is transmitted to the base station only, and the connection reestablishment flow is not required to be initiated.

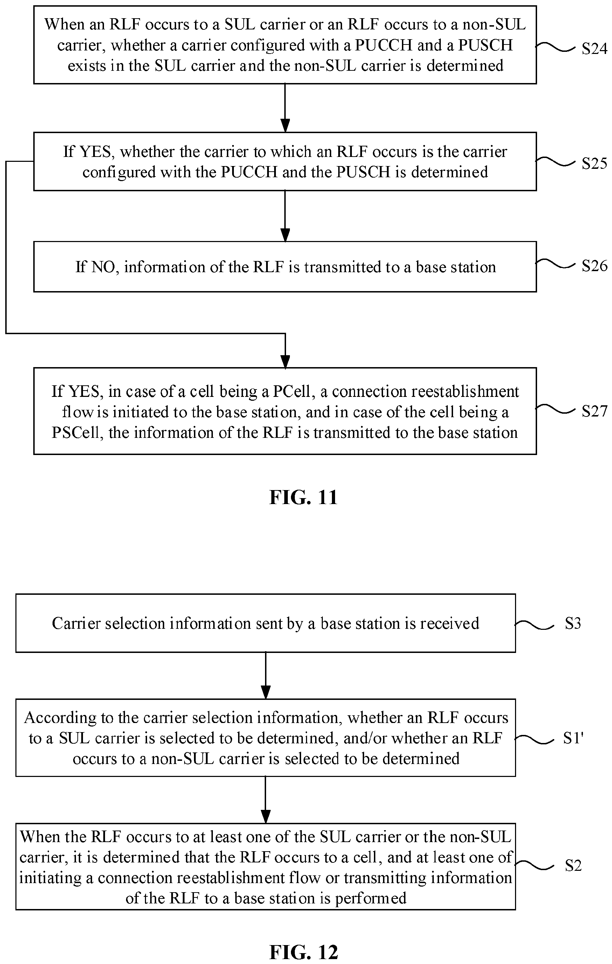

FIG. 11 is a schematic flow chart showing initiation of a connection reestablishment flow and/or transmission of information of an RLF to a base station, according to the invention. As illustrated in FIG. 11, based on the embodiment illustrated in FIG. 1, the operation that the at least one of initiating the connection reestablishment flow or transmitting information of the RLF to the base station is performed includes the following steps.

In S24, when the RLF occurs to the SUL carrier or the RLF occurs to the non-SUL carrier, whether a carrier configured with a PUCCH and a PUSCH exists in the SUL carrier and the non-SUL carrier is determined.

In S25, if YES, whether the carrier to which the RLF occurs is the carrier configured with the PUCCH and the PUSCH is determined.

In S26, if NO, the information of the RLF is transmitted to the base station.

In S27, if YES, in case of the cell being a PCell, the connection reestablishment flow is initiated to the base station, and in case of the cell being a PSCell, the information of the RLF is transmitted to the base station.

In an embodiment, when it is determined that the RLF occurs to one of the SUL carrier and the non-SUL carrier, whether the carrier configured with the PUCCH and the PUSCH exists in the SUL carrier and the non-SUL carrier is determined.

When the carrier configured with the PUCCH and the PUSCH exists, whether the carrier to which the RLF occurs is the carrier configured with the PUCCH and the PUSCH is further determined.

When the RLF occurs to the carrier which is not configured with the PUCCH and the PUSCH, the user equipment communicates normally through the carrier configured with the PUCCH and the PUSCH, so that the connection reestablishment flow is not required to be initiated to the base station, and it is only necessary to transmit the information of the RLF to the base station.

When the RLF occurs to the carrier configured with the PUCCH and the PUSCH, the user equipment cannot communicate normally, so that the connection reestablishment flow is initiated to the base station to enable the base station to recover a radio link of the carrier configured with the PUCCH and the PUSCH for the user equipment to communicate normally based on the carrier configured with the PUCCH and the PUSCH.

FIG. 12 is a schematic flow chart showing another method for determining radio link status, according to an embodiment of the present disclosure. As illustrated in FIG. 12, based on the embodiment illustrated in FIG. 1, the method for determining radio link status further includes the following step.

In S3, carrier selection information sent by the base station is received.

The operation that the at least one of whether the RLF occurs to the SUL carrier of the cell configured with the SUL carrier or whether the RLF occurs to the non-SUL carrier is determined includes the following step.

In S1', according to the carrier selection information, the at least one of whether the RLF occurs to the SUL carrier or whether the RLF occurs to the non-SUL carrier is selected to be determined.

In an embodiment, the carrier selection information may be selecting to determine whether the RLF occurs to the SUL carrier, and in such case, the user equipment may determine whether the RLF occurs to the SUL carrier only.

Or, the carrier selection information may be determining whether the RLF occurs to the non-SUL carrier, and in such case, the user equipment may determine whether the RLF occurs to the non-SUL carrier only.

Or, the carrier selection information may be determining whether the RLF occurs to the SUL carrier and the non-SUL carrier respectively, and in such case, the user equipment may determine whether the RLF occurs to the SUL carrier and the non-SUL carrier respectively.

In an embodiment, the carrier selection information may be determining that the RLF occurs to the cell configured with the SUL carrier only when it is determined that the RLF occurs to the SUL carrier, and in such case, the user equipment determines that the RLF occurs to the cell only when determining that the RLF occurs to the SUL carrier.

Or, the carrier selection information may be determining that the RLF occurs to the cell configured with the SUL carrier only when it is determined that the RLF occurs to the non-SUL carrier, and in such case, the user equipment determines that the RLF occurs to the cell only when determining that the RLF occurs to the non-SUL carrier.

Or, the carrier selection information may be determining that the RLF occurs to the cell configured with the SUL carrier only when it is determined that the RLF occurs to both the SUL carrier and the non-SUL carrier, and in such case, the user equipment determines that the RLF occurs to the cell only when determining that the RLF occurs to the SUL carrier and the non-SUL carrier respectively.

In an embodiment, besides the contents illustrated in the abovementioned two embodiments, there may also other conditions for the carrier selection information. For example, it is determined that the RLF occurs to the cell configured with the SUL carrier only when it is determined that the RLF occurs to the carrier configured with the PUCCH and/or the PUSCH in the SUL carrier and the non-SUL carrier. The content of the carrier selection information may be set as required and will not be elaborated one by one herein.

Corresponding to the embodiments of the method for determining radio link status, the present disclosure also provides embodiments of a device for determining radio link status.

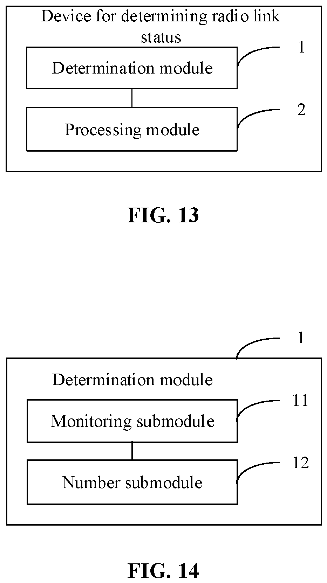

FIG. 13 is a schematic block diagram of a device for determining radio link status, according to an embodiment of the present disclosure. The device for determining radio link status illustrated in the embodiment may be applied to user equipment. As illustrated in FIG. 13, the device for determining radio link status may include:
a determination module 1, configured to determine whether an RLF occurs to at least one of a SUL carrier of a cell configured with the SUL carrier or a non-SUL carrier; and
a processing module 2, configured to, when the RLF occurs to at least one of the SUL carrier or the non-SUL carrier, determine that the RLF occurs to the cell, and perform at least one of initiating a connection reestablishment flow or transmitting information of the RLF to a base station.

FIG. 14 is a schematic block diagram of a determination module, according to an exemplary embodiment. As illustrated in FIG. 14, based on the embodiment illustrated in FIG. 13, the determination module 1 includes:
a monitoring submodule 11, configured to perform RLM on the at least one of the SUL carrier or the non-SUL carrier; and
a number submodule 12, configured to, when a continuous out-of-sync number of the SUL carrier is greater than or equal to a first number, start a first timer, and when a continuous in-sync number of the SUL carrier is less than a second number before the first timer expires, determine that the RLF occurs to the SUL carrier, and/or
when a continuous out-of-sync number of the non-SUL carrier is greater than or equal to a third number, start a second timer, and when a continuous in-sync number of the non-SUL carrier is less than a fourth number before the second timer expires, determine that the RLF occurs to the non-SUL carrier.

Optionally, the monitoring submodule is configured to determine a carrier configured with a PUCCH in the SUL carrier and the non-SUL carrier, and perform the RLM on the carrier configured with the PUCCH.

Optionally, the monitoring submodule is configured to determine a carrier configured with a PUCCH and a PUSCH in the SUL carrier and the non-SUL carrier, and perform the RLM on the carrier configured with the PUCCH and the PUSCH.

Optionally, when the continuous in-sync number of the SUL carrier is less than the second number, the number submodule is further configured to determine whether the SUL carrier is configured with a PUCCH, and when the SUL carrier is configured with the PUCCH, determine that the RLF occurs to the SUL carrier,
and/or, when the continuous in-sync number of the non-SUL carrier is less than the fourth number, the number submodule is further configured to determine whether the non-SUL carrier is configured with the PUCCH, and when the non-SUL carrier is configured with the PUCCH, determine that the RLF occurs to the non-SUL carrier.

Optionally, when the continuous in-sync number of the SUL carrier is less than the second number, the number submodule is further configured to determine whether the SUL carrier is configured with a PUCCH and a PUSCH, and when the SUL carrier is configured with the PUCCH and the PUSCH, determine that the RLF occurs to the SUL carrier, and/or
when the continuous in-sync number of the non-SUL carrier is less than the fourth number, the number submodule is further configured to determine whether the non-SUL carrier is configured with the PUCCH and the PUSCH, and when the non-SUL carrier is configured with the PUCCH and the PUSCH, determine that the RLF occurs to the non-SUL carrier.

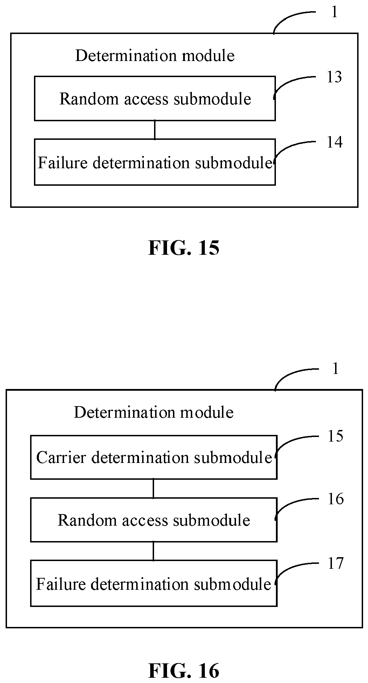

FIG. 15 is a schematic block diagram of another determination module, according to an exemplary embodiment. As illustrated in FIG. 15, based on the embodiment illustrated in FIG. 13, the determination module 1 includes:
a random access submodule 13, configured to initiate random access to the SUL carrier and the non-SUL carrier; and
a failure determination submodule 14, configured to, when the random access initiated to the SUL carrier fails, determine that the RLF occurs to the SUL carrier, and/or, when the random access initiated to the non-SUL carrier fails, determine that the RLF occurs to the non-SUL carrier.

FIG. 16 is a schematic block diagram of another determination module, according to an embodiment of the present disclosure. As illustrated in FIG. 16, based on the embodiment illustrated in FIG. 13, the determination module 1 includes:
a carrier determination submodule 15, configured to determine a carrier configured with a PUCCH in the SUL carrier and the non-SUL carrier;
a random access submodule 16, configured to initiate random access to the carrier configured with the PUCCH; and
a failure determination submodule 17, configured to, when the random access initiated to the carrier configured with the PUCCH fails, determine that the RLF occurs to the at least one of the SUL carrier or the non-SUL carrier.

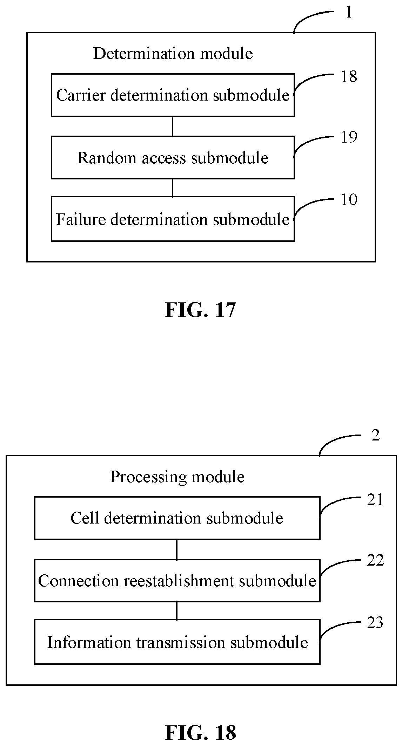

FIG. 17 is a schematic block diagram of another determination module, according to an embodiment of the present disclosure. As illustrated in FIG. 17, based on the embodiment illustrated in FIG. 13, the determination module 1 includes:
a carrier determination submodule 18, configured to determine a carrier configured with a PUCCH and a PUSCH in the SUL carrier and the non-SUL carrier;
a random access submodule 19, configured to initiate random access to the carrier configured with the PUCCH and the PUSCH; and
a failure determination submodule 10, configured to, when the random access initiated to the carrier configured with the PUCCH and the PUSCH fails, determine that the RLF occurs to the at least one of the SUL carrier or the non-SUL carrier.

FIG. 18 is a schematic block diagram of a processing module, according to an embodiment of the present disclosure. As illustrated in FIG. 18, based on the embodiment illustrated in FIG. 13, the processing module 2 includes:
a cell determination submodule 21, configured to determine whether the cell is a PCell or a PSCell;
a connection reestablishment submodule 22, configured to, when the cell is the PCell, initiate the connection reestablishment flow to the base station; and
an information transmission submodule 23, configured to, when the cell is the PSCell, transmit the information of the RLF to the base station.

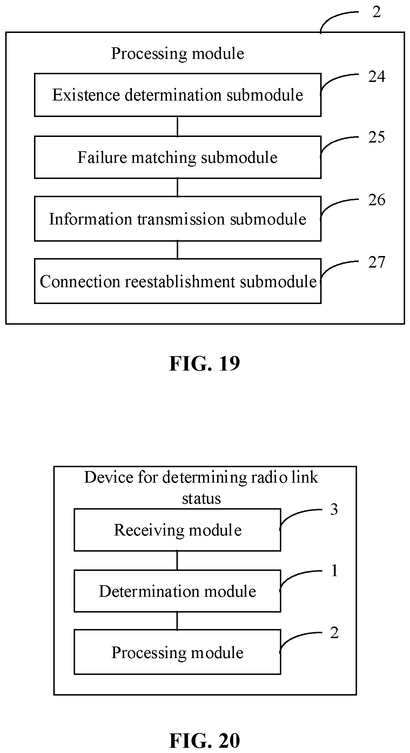

FIG. 19 is a schematic block diagram of another processing module, according to an embodiment of the present disclosure. As illustrated in FIG. 19, based on the embodiment illustrated in FIG. 13, the processing module 2 includes:
an existence determination submodule 24, configured to, when the RLF occurs to the SUL carrier or the RLF occurs to the non-SUL carrier, determine whether a carrier configured with a PUCCH and a PUSCH exists in the SUL carrier and the non-SUL carrier;
a failure matching submodule 25, configured to, when the carrier configured with the PUCCH and the PUSCH exists, determine whether the carrier to which the RLF occurs is the carrier configured with the PUCCH and the PUSCH;
an information transmission submodule 26, configured to, when the carrier to which the RLF occurs is not the carrier configured with the PUCCH and the PUSCH, transmit the information of the RLF to the base station, and when the carrier to which the RLF occurs is the carrier configured with the PUCCH and the PUSCH, in case of the cell being a PSCell, transmit the information of the RLF to the base station; and
a connection reestablishment submodule 27, configured to, when the carrier to which the RLF occurs is the carrier configured with the PUCCH and the PUSCH, in case of the cell being a PCell, initiate the connection reestablishment flow to the base station.

FIG. 20 is a schematic block diagram of another device for determining radio link status, according to an embodiment of the present disclosure. As illustrated in FIG. 20, based on the embodiment illustrated in FIG. 13, the device for determining radio link status further includes:
a receiving module 3, configured to receive carrier selection information sent by the base station.

The determination module 1 is configured to, according to the carrier selection information, select to determine the at least one of whether the RLF occurs to the SUL carrier or whether the RLF occurs to the non-SUL carrier.

With respect to the device in any one of the above embodiments, the specific manners for performing operations for individual modules therein have been described in detail in the method embodiments, which will not be elaborated herein.

The device embodiments substantially correspond to the method embodiments, and thus related parts refer to part of descriptions of the method embodiments. Each device embodiment described above is only schematic, units described as separate parts therein may or may not be physically separated, and parts displayed as units may or may not be physical units, and namely may be located in the same place or may also be distributed to multiple network units. Part or all of the modules therein may be selected according to a practical requirement to achieve the purpose of the solutions of the embodiments. Those of ordinary skill in the art may understand and implement without creative work.

An embodiment of the present disclosure also discloses an electronic device, which includes:
a processor; and
a memory configured to store instructions executable by the processor,
wherein the processor is configured to:
execute the steps in the method of any one of the embodiments in FIG. 1 to FIG. 12.

An embodiment of the present disclosure also discloses a computer-readable storage medium, in which a computer program is stored, and the program is executed by a processor to implement the steps in the method of any one of the embodiments in FIG. 1 to FIG. 12.

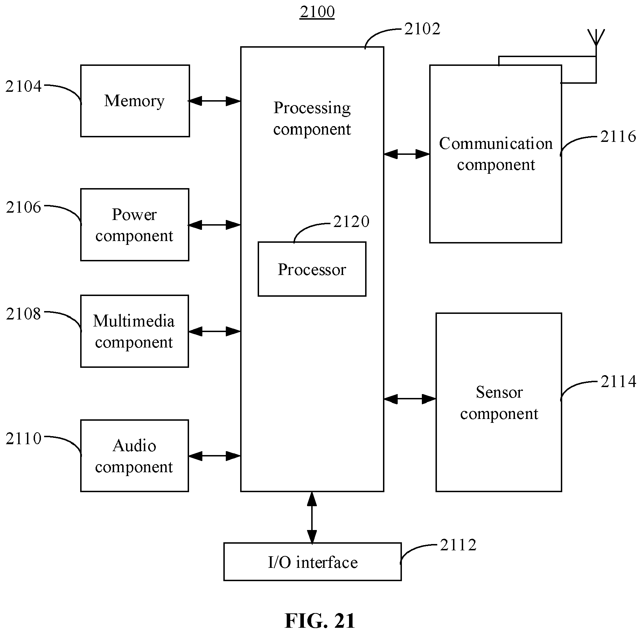

FIG. 21 is a schematic block diagram of a device for determining radio link status 2100, according to an exemplary embodiment. For example, the device 2100 may be a mobile phone, a computer, a digital broadcast terminal, a messaging device, a gaming console, a tablet, a medical device, exercise equipment, a personal digital assistant, and the like.

Referring to FIG. 21, the device 2100 may include one or more of the following components: a processing component 2102, a memory 2104, a power component 2106, a multimedia component 2108, an audio component 2110, an input/output (I/O) interface 2112, a sensor component 2114, and a communication component 2116.

The processing component 2102 typically controls overall operations of the device 2100, such as the operations associated with display, telephone calls, data communications, camera operations, and recording operations. The processing component 2102 may include one or more processors 2120 to execute instructions to perform all or part of the steps in the abovementioned method. Moreover, the processing component 2102 may include one or more modules which facilitate interaction between the processing component 2102 and other components. For instance, the processing component 2102 may include a multimedia module to facilitate interaction between the multimedia component 2108 and the processing component 2102.

The memory 2104 is configured to store various types of data to support the operation of the device 2100. Examples of such data include instructions for any applications or methods operated on the device 2100, contact data, phonebook data, messages, pictures, video, etc. The memory 2104 may be implemented by any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, and a magnetic or optical disk.

The power component 2106 provides power to various components of the device 2100. The power component 2106 may include a power management system, one or more power supplies, and other components associated with generation, management and distribution of power for the device 2100.

The multimedia component 2108 includes a screen providing an output interface between the device 2100 and a user. In some embodiments, the screen may include a liquid crystal display (LCD) and a touch panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also detect a period of time and a pressure associated with the touch or swipe action. In some embodiments, the multimedia component 2108 includes a front camera and/or a rear camera. The front camera and/or the rear camera may receive external multimedia data when the device 2100 is in an operation mode, such as a photographing mode or a video mode. Each of the front camera and the rear camera may be a fixed optical lens system or have focusing and optical zooming capabilities.

The audio component 2110 is configured to output and/or input an audio signal. For example, the audio component 2110 includes a microphone (MIC), and the MIC is configured to receive an external audio signal when the device 2100 is in an operation mode, such as a call mode, a recording mode and a voice recognition mode. The received audio signal may further be stored in the memory 2104 or sent through the communication component 2116. In some embodiments, the audio component 2110 further includes a speaker configured to output the audio signal.

The I/O interface 2112 provides an interface between the processing component 2102 and peripheral interface modules, such as a keyboard, a click wheel, buttons, and the like. The buttons may include, but are not limited to: a home button, a volume button, a starting button and a locking button.

The sensor component 2114 includes one or more sensors configured to provide status assessments of various aspects of the device 2100. For instance, the sensor component 2114 may detect an on/off status of the device 2100 and relative positioning of components, such as a display and small keyboard of the device 2100, and the sensor component 2114 may further detect a change in a position of the device 2100 or a component of the device 2100, presence or absence of contact between the user and the device 2100, orientation or acceleration/deceleration of the device 2100 and a change in temperature of the device 2100. The sensor component 2114 may include a proximity sensor configured to detect presence of an object nearby without any physical contact. The sensor component 2114 may also include a light sensor, such as a complementary metal oxide semiconductor (CMOS) or charge coupled device (CCD) image sensor, configured for use in an imaging application. In some embodiments, the sensor component 2114 may also include an acceleration sensor, a gyroscope sensor, a magnetic sensor, a pressure sensor or a temperature sensor.

The communication component 2116 is configured to facilitate wired or wireless communication between the device 2100 and other devices. The device 2100 may access a communication-standard-based wireless network, such as a wireless fidelity (WiFi) network, a 2nd-generation (2G) or 3rd-generation (3G) network or a combination thereof. In an exemplary embodiment, the communication component 2116 receives a broadcast signal or broadcast associated information from an external broadcast management system through a broadcast channel. In an exemplary embodiment, the communication component 2116 further includes a near field communication (NFC) module to facilitate short-range communications. For example, the NFC module may be implemented based on a radio frequency identification (RFID) technology, an infrared data association (IrDA) technology, an ultra-wide band (UWB) technology, a Bluetooth (BT) technology, and other technologies.

In an exemplary embodiment, the device 2100 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, and is configured to execute the method of any embodiment.

In an exemplary embodiment, there is also provided a non-transitory computer-readable storage medium including instructions, such as included in the memory 2104 executable by the processor 2120 of the device 2100 for performing the abovementioned methods. For example, the non-transitory computer-readable storage medium may be a ROM, a random access memory (RAM), a compact disc read-only memory (CD-ROM), a magnetic tape, a floppy disc, an optical data storage device and the like.

Other implementation solutions of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

It is to be noted that relational terms "first", "second" and the like in the present disclosure are adopted only to distinguish one entity or operation from another entity or operation and not always to require or imply existence of any such practical relationship or sequence between the entities or operations. Terms "include" and "have" or any other variation thereof is intended to cover nonexclusive inclusions, so that a process, method, object or device including a series of elements not only includes those elements, but also includes other elements that are not clearly listed, or further includes elements intrinsic to the process, the method, the object or the device. Under the condition of no more limitations, an element defined by statement "including a/an......" does not exclude existence of another element that is the same in a process, method, object or device including the element.

The method and device provided in the embodiments of the present disclosure are introduced above in detail. The principle and implementation modes of the present disclosure are elaborated in the specification with specific examples. The embodiments are described above only to help the method of the present disclosure and the core concept thereof to be understood. In addition, those of ordinary skill in the art may make variations to the specific implementation modes and the scope of application according to the concept of the present disclosure. To sum up, the contents of the specification should not be understood as limits to the present disclosure.

## Claims

1. A method for determining radio link status, the method comprises determining (S1) whether a radio link failure, RLF, occurs to at least one of a supplement uplink, SUL, carrier of a cell configured with the SUL carrier or a non-SUL carrier; and in response to the RLF occurring to at least one of the SUL carrier or the non-SUL carrier, determining that the RLF occurs to the cell, and performing (S2) at least one of initiating a connection reestablishment flow or transmitting information of the RLF to a base station according to whether the cell is a primary cell, PCell, or a primary secondary cell, PSCell; wherein performing the at least one of initiating the connection reestablishment flow or transmitting information of the RLF to the base station comprises:
in response to the RLF occurring to the SUL carrier or the non-SUL carrier, determining (S24) whether a carrier configured with a physical uplink control channel, PUCCH, and a physical uplink shared channel, PUSCH, exists in the SUL carrier and the non-SUL carrier;
in response to the carrier configured with the PUCCH and the PUSCH existed, determining (S25) whether the carrier to which the RLF occurs is the carrier configured with the PUCCH and the PUSCH;
in response to the carrier to which the RLF occurs being not the carrier configured with the PUCCH and the PUSCH, transmitting (S26) the information of the RLF to the base station; and
in response to the carrier to which the RLF occurs being the carrier configured with the PUCCH and the PUSCH, in case of the cell being a PCell, initiating (S27) the connection reestablishment flow to the base station, and in case of the cell being a PSCell, transmitting the information of the RLF to the base station.

2. The method of claim 1, wherein determining whether the RLF occurs to the at least one of the SUL carrier of the cell configured with the SUL carrier or the non-SUL carrier comprises:
performing (S11) radio link monitoring, RLM, on the at least one of the SUL carrier or the non-SUL carrier;
in response to a continuous out-of-sync number of the SUL carrier being greater than or equal to a first number, starting (S12) a first timer, and in response to a continuous in-sync number of the SUL carrier being less than a second number before the first timer expires,
determining that the RLF occurs to the SUL carrier; and/or
in response to a continuous out-of-sync number of the non-SUL carrier being greater than or equal to a third number, starting (S13) a second timer, and in response to a continuous in-sync number of the non-SUL carrier being less than a fourth number before the second timer expires, determining that the RLF occurs to the non-SUL carrier.

3. The method of claim 2, wherein performing the RLM on the at least one of the SUL carrier or the non-SUL carrier comprises:
determining (S111) a carrier configured with a PUCCH in the SUL carrier and the non-SUL carrier; and
performing (S112) the RLM on the carrier configured with the PUCCH; or
wherein performing the RLM on the at least one of the SUL carrier or the non-SUL carrier comprises:
determining (S113) a carrier configured with a PUCCH and a PUSCH in the SUL carrier and the non-SUL carrier; and
performing (S114) the RLM on the carrier configured with the PUCCH and the PUSCH.

4. The method of claim 2, wherein, in response to the continuous in-sync number of the SUL carrier being less than the second number, the determining the at least one of whether the RLF occurs to the SUL carrier of the cell configured with the SUL carrier or whether the RLF occurs to the non-SUL carrier further comprises:
determining (S14) whether the SUL carrier is configured with a PUCCH, and
in response to the SUL carrier configured with the PUCCH, determining (S15) that the RLF occurs to the SUL carrier; and/or
in response to the continuous in-sync number of the non-SUL carrier being less than the fourth number, the determining the at least one of whether the RLF occurs to the SUL carrier of the cell configured with the SUL carrier or whether the RLF occurs to the non-SUL carrier further comprises:
determining (S16) whether the non-SUL carrier is configured with the PUCCH, and
in response to the non-SUL carrier configured with the PUCCH, determining (S17) that the RLF occurs to the non-SUL carrier.

5. The method of claim 2, wherein, in response to the continuous in-sync number of the SUL carrier being less than the second number, the determining the at least one of whether the RLF occurs to the SUL carrier of the cell configured with the SUL carrier or whether the RLF occurs to the non-SUL carrier further comprises:
determining (S14') whether the SUL carrier is configured with a PUCCH and a PUSCH, and
in response to the SUL carrier configured with the PUCCH and the PUSCH, determining (S15') that the RLF occurs to the SUL carrier; and/or
in response to the continuous in-sync number of the non-SUL carrier being less than the fourth number, the determining the at least one of whether the RLF occurs to the SUL carrier of the cell configured with the SUL carrier or whether the RLF occurs to the non-SUL carrier further comprises:
determining (S16') whether the non-SUL carrier is configured with the PUCCH and the PUSCH, and
in response to the non-SUL carrier configured with the PUCCH and the PUSCH, determining (S17') that the RLF occurs to the non-SUL carrier.

6. The method of claim 1, wherein determining the at least one of whether the RLF occurs to the SUL carrier of the cell configured with the SUL carrier or whether the RLF occurs to the non-SUL carrier comprises:
initiating (S1A) random access to the SUL carrier and the non-SUL carrier; and
in response to the random access initiated to the SUL carrier failed, determining (S1B) that the RLF occurs to the SUL carrier, and/or, when the random access initiated to the non-SUL
carrier fails, determining that the RLF occurs to the non-SUL carrier; or
wherein determining the at least one of whether the RLF occurs to the SUL carrier of the cell configured with the SUL carrier or whether the RLF occurs to the non-SUL carrier comprises:
determining (S1C) a carrier configured with a PUCCH in the SUL carrier and the non-SUL carrier;
initiating (S1D) random access to the carrier configured with the PUCCH; and
in response to the random access initiated to the carrier configured with the PUCCH failed, determining (S1E) that the RLF occurs to the at least one of the SUL carrier or the non-SUL carrier; or
wherein determining the at least one of whether the RLF occurs to the SUL carrier of the cell configured with the SUL carrier or whether the RLF occurs to the non-SUL carrier comprises:
determining (S1F) a carrier configured with a PUCCH and a PUSCH in the SUL carrier and the non-SUL carrier;
initiating (S1G) random access to the carrier configured with the PUCCH and the PUSCH; and
in response to the random access initiated to the carrier configured with the PUCCH and the PUSCH failed, determining (S1H) that the RLF occurs to the at least one of the SUL carrier or the non-SUL carrier.

7. A device for determining radio link status, the device comprises
a determination module (1), configured to determine whether a radio link failure, RLF, occurs at least one of to a supplement uplink, SUL, carrier of a cell configured with the SUL carrier or a non-SUL carrier; and
a processing module (2), configured to, in response to the RLF occurring to the at least one of the SUL carrier or the non-SUL carrier, determine that the RLF occurs to the cell, and perform the at least one of initiating a connection reestablishment flow or transmitting information of the RLF to a base station according to whether the cell is a primary cell, Pcell, or a primary secondary cell, PSCell;
wherein the processing module (2) comprises:
an existence determination submodule (24), configured to, in response to the RLF occurring to the SUL carrier or the non-SUL carrier, determine whether a carrier configured with a physical uplink control channel, PUCCH, and a physical uplink shared channel, PUSCH, exists in the SUL carrier and the non-SUL carrier;
a failure matching submodule (25), configured to, in response to the carrier configured with the PUCCH and the PUSCH existed, determine whether the carrier to which the RLF occurs is the carrier configured with the PUCCH and the PUSCH;
an information transmission submodule (26), configured to, in response to the carrier to which the RLF occurs being not the carrier configured with the PUCCH and the PUSCH, transmit the information of the RLF to the base station, and in response to the carrier to which the RLF occurs being the carrier configured with the PUCCH and the PUSCH, in case of the cell being a PSCell, transmit the information of the RLF to the base station; and
a connection reestablishment submodule (27), configured to, in response to the carrier to which the RLF occurs being the carrier configured with the PUCCH and the PUSCH, in case of the cell being a PCell, initiate the connection reestablishment flow to the base station.

8. The device of claim 7, wherein the determination module (1) comprises:
a monitoring submodule (11), configured to perform radio link monitoring, RLM, on the at least one of the SUL carrier or the non-SUL carrier; and
a number submodule (12), configured to, in response to a continuous out-of-sync number of the SUL carrier being greater than or equal to a first number, start a first timer, and in response to a continuous in-sync number of the SUL carrier being less than a second number before the first timer expires, determine that the RLF occurs to the SUL carrier, and/or
in response to a continuous out-of-sync number of the non-SUL carrier being greater than or equal to a third number, start a second timer, and in response to a continuous in-sync number of the non-SUL carrier being less than a fourth number before the second timer expires, determine that the RLF occurs to the non-SUL carrier.

9. The device of claim 8, wherein the monitoring submodule (11) is configured to determine a carrier configured with a PUCCH in the SUL carrier and the non-SUL carrier, and perform the RLM on the carrier configured with the PUCCH; or
wherein the monitoring submodule (11) is configured to determine a carrier configured with a PUCCH and a PUSCH in the SUL carrier and the non-SUL carrier, and perform the RLM on the carrier configured with the PUCCH and the PUSCH.

10. The device of claim 8, wherein, in response to the continuous in-sync number of the SUL carrier being less than the second number, the number submodule (12) is further configured to determine whether the SUL carrier is configured with a PUCCH, and in response to the SUL carrier configured with the PUCCH, determine that the RLF occurs to the SUL carrier,
and/or, in response to the continuous in-sync number of the non-SUL carrier being less than the fourth number, the number submodule (12) is further configured to determine whether the non-SUL carrier is configured with the PUCCH, and in response to the non-SUL carrier configured with the PUCCH, determine that the RLF occurs to the non-SUL carrier.

11. The device of claim 8, wherein, in response to the continuous in-sync number of the SUL carrier being less than the second number, the number submodule (12) is further configured to determine whether the SUL carrier is configured with a PUCCH and a PUSCH, and in response to the SUL carrier configured with the PUCCH and the PUSCH, determine that the RLF occurs to the SUL carrier, and/or
in response to the continuous in-sync number of the non-SUL carrier being less than the fourth number, the number submodule (12) is further configured to determine whether the non-SUL carrier is configured with the PUCCH and the PUSCH, and in response to the non-SUL carrier configured with the PUCCH and the PUSCH, determine that the RLF occurs to the non-SUL carrier.

12. The device of claim 7, wherein the determination module (1) comprises:
a random access submodule (13), configured to initiate random access to the SUL carrier and the non-SUL carrier; and
a failure determination submodule (14), configured to, in response to the random access initiated to the SUL carrier failed, determine that the RLF occurs to the SUL carrier, and/or, in response to the random access initiated to the non-SUL carrier failed, determine that the RLF occurs to the non-SUL carrier; or
wherein the determination module (1) comprises:
a carrier determination submodule (15), configured to determine a carrier configured with a PUCCH in the SUL carrier and the non-SUL carrier;
a random access submodule (16), configured to initiate random access to the carrier configured with the PUCCH; and
a failure determination submodule (17), configured to, in response to the random access initiated to the carrier configured with the PUCCH failed, determine that the RLF occurs to the at least one of the SUL carrier or the non-SUL carrier; or
wherein the determination module (1) comprises:
a carrier determination submodule (18), configured to determine a carrier configured with a PUCCH and a PUSCH in the SUL carrier and the non-SUL carrier;
a random access submodule (19), configured to initiate random access to the carrier configured with the PUCCH and the PUSCH; and
a failure determination submodule (10), configured to, in response to the random access initiated to the carrier configured with the PUCCH and the PUSCH failed, determine that the RLF occurs to the at least one of the SUL carrier or the non-SUL carrier.

## Patentansprüche

1. Verfahren zur Bestimmung eines Funkverbindungsstatus, wobei das Verfahren umfasst:
Bestimmen (S1), ob ein Funkverbindungsfehler, RLF, bei mindestens einem von einem Supplement-Uplink-, SUL, -Träger einer mit dem SUL-Träger konfigurierten Zelle und/oder einem Nicht-SUL-Träger auftritt; und
als Reaktion darauf, dass der RLF beim SUL-Träger und/oder Nicht-SUL-Träger auftritt, Bestimmen, dass der RLF bei der Zelle auftritt, und Durchführen (S2) von mindestens einem aus Initiieren eines Verbindungswiederaufbauflusses oder Senden von Informationen des RLF an eine Basisstation darüber, ob die Zelle eine Primärzelle, PCell, oder eine Primär-Sekundärzelle, PSCell, ist;
wobei das Durchführen von mindestens einem aus dem Initiieren des Verbindungswiederaufbauflusses oder dem Senden von Informationen des RLF an die Basisstation umfasst:
als Reaktion darauf, dass der RFL im SUL-Träger oder Nicht-SUL-Träger auftritt, Bestimmen (S24), ob ein mit einem physikalischen Uplink-Steuerkanal, PUCCH, und einem gemeinsam genutzten physikalischen Uplink-Kanal, PUSCH, konfigurierter Träger in dem SUL-Träger und dem Nicht-SUL-Träger existiert;
als Reaktion darauf, dass ein mit dem PUCCH und dem PUSCH konfigurierte Träger existiert, Bestimmen (S25), ob der Träger, bei dem der RLF auftritt, der mit dem PUCCH und dem PUSCH konfigurierte Träger ist;
als Reaktion darauf, dass der Träger, bei dem der RLF auftritt, nicht der mit dem PUCCH und dem PUSCH konfigurierte Träger ist, Senden (S26) der Informationen des RLF an die Basisstation; und
als Reaktion darauf, dass der Träger, bei dem der RFL auftritt, der mit dem PUCCH und dem PUSCH konfigurierte Träger ist, wenn die Zelle eine PCell ist, Initiieren (S27) des Verbindungswiederaufbauflusses zur Basisstation, und wenn die Zelle eine PSCell ist, Senden der Informationen des RLF an die Basisstation.

2. Verfahren nach Anspruch 1, wobei das Bestimmen, ob der RLF bei dem SUL-Träger der mit dem SUL-Träger konfigurierten Zelle und/oder bei dem Nicht-SUL-Träger auftritt, umfasst:
Durchführen (S11) einer Funkverbindungsüberwachung, RLM, des SUL-Trägers und/oder Nicht-SUL-Trägers;
als Reaktion darauf, dass eine kontinuierliche nicht synchrone Zahl des SUL-Trägers größer als eine oder gleich einer ersten Zahl ist, Starten (S12) eines ersten Timers, und als Reaktion darauf, dass eine kontinuierliche synchrone Zahl des SUL-Trägers kleiner als eine zweite Zahl ist, bevor der erste Timer abläuft, Bestimmen dass der RLF beim SUL-Träger auftritt; und/oder als Reaktion darauf, dass eine kontinuierliche nicht synchrone Zahl des Nicht-SUL-Trägers größer als eine oder gleich einer dritten Zahl ist, Starten (S13) eines zweiten Timers, und als Reaktion darauf, dass eine kontinuierliche synchrone Zahl des Nicht-SUL-Trägers kleiner als eine vierte Zahl ist, bevor der zweite Timer abläuft, Bestimmen dass der RLF beim SUL-Träger auftritt.

3. Verfahren nach Anspruch 2, wobei das Durchführen der RLM des SUL-Trägers und/oder Nicht-SUL-Trägers umfasst:
Bestimmen (S111) eines mit einem PUCCH konfigurierten Trägers im SUL-Träger und Nicht-SUL-Träger; und
Durchführen (S112) der RLM des mit dem PUCCH konfigurierten Trägers; oder
wobei das Durchführen der RLM des SUL-Trägers und/oder Nicht-SUL-Trägers umfasst:
Bestimmen (S113) eines mit einem PUCCH und einem PUSCH konfigurierten Trägers im SUL-Träger und Nicht-SUL-Träger; und
Durchführen (S114) der RLM des mit dem PUCCH und dem PUSCH konfigurierten Trägers.

4. Verfahren nach Anspruch 2, wobei als Reaktion darauf, dass die kontinuierliche synchrone Zahl des SUL-Trägers kleiner als die zweite Zahl ist, das Bestimmen, ob der RLF beim SUL-Träger der mit dem SUL-Träger konfigurierten Zelle auftritt und/oder ob der RLF beim Nicht-SUL-Träger auftritt, ferner umfasst:
Bestimmen (S14), ob der SUL-Träger mit einem PUCCH konfiguriert ist, und als Reaktion darauf, dass der SUL-Träger mit einem PUCCH konfiguriert ist, Bestimmen (S15), dass der RLF beim SUL-Träger auftritt; und/oder
als Reaktion darauf, dass die kontinuierliche synchrone Zahl des Nicht-SUL-Trägers kleiner als die vierte Zahl ist, das Bestimmen, ob der RLF beim SUL-Träger der mit dem SUL-Träger konfigurierten Zelle auftritt und/oder ob der RLF beim Nicht-SUL-Träger auftritt, ferner umfasst:
Bestimmen (S16), ob der Nicht-SUL-Träger mit dem PUCCH konfiguriert ist, und
als Reaktion darauf, dass der Nicht-SUL-Träger mit dem PUCCH konfiguriert ist, Bestimmen (S17), dass der RLF beim Nicht-SUL-Träger auftritt.

5. Verfahren nach Anspruch 2, wobei als Reaktion darauf, dass die kontinuierliche synchrone Zahl des SUL-Trägers kleiner als die zweite Zahl ist, das Bestimmen, ob der RLF beim SUL-Träger der mit dem SUL-Träger konfigurierten Zelle auftritt und/oder ob der RLF beim Nicht-SUL-Träger auftritt, ferner umfasst:
Bestimmen (S14'), ob der SUL-Träger mit einem PUCCH und einem PUSCH konfiguriert ist, und
als Reaktion darauf, dass der SUL-Träger mit dem PUCCH und dem PUSCH konfiguriert ist, Bestimmen (S15'), dass der RLF beim SUL-Träger auftritt; und/oder
als Reaktion darauf, dass die kontinuierliche synchrone Zahl des Nicht-SUL-Trägers kleiner als die vierte Zahl ist, das Bestimmen, ob der RLF bei dem SUL-Träger der mit dem SUL-Träger konfigurierten Zelle auftritt und/oder ob der RLF beim Nicht-SUL-Träger auftritt, ferner umfasst:
Bestimmen (S16'), ob der Nicht-SUL-Träger mit dem PUCCH und dem PUSCH konfiguriert ist, und
als Reaktion darauf, dass der Nicht-SUL-Träger mit dem PUCCH und dem PUSCH konfiguriert ist, Bestimmen (S17'), dass der RLF beim Nicht-SUL-Träger auftritt.

6. Verfahren nach Anspruch 1, wobei das Bestimmen, ob der RLF beim SUL-Träger der mit dem SUL-Träger konfigurierten Zelle auftritt und/oder ob der RLF bei dem Nicht-SUL-Träger auftritt, umfasst:
Initiieren (S1A) eines wahlfreien Zugriffs auf den SUL-Träger und den Nicht-SUL-Träger; und
als Reaktion darauf, dass der initiierte wahlfreie Zugriff auf den SUL-Träger fehlgeschlagen ist, Bestimmen (S1B), dass der RLF beim SUL-Träger auftritt, und/oder, wenn der initiierte wahlfreie Zugriff auf den Nicht-SUL-Träger fehlgeschlagen ist, Bestimmen, dass der RLF beim Nicht-SUL-Träger auftritt; oder
wobei das Bestimmen, ob der RLF beim SUL-Träger der mit dem SUL-Träger konfigurierten Zelle auftritt und/oder ob der RLF beim Nicht-SUL-Träger auftritt, umfasst:
Bestimmen (S1C) eines mit einem PUCCH konfigurierten Trägers im SUL-Träger und Nicht-SUL-Träger;
Initiieren (S1D) eines wahlfreien Zugriffs auf den mit dem PUCCH konfigurierten Träger; und
als Reaktion darauf, dass der initiierte wahlfreie Zugriff auf den mit dem PUCCH konfigurierten Träger fehlgeschlagen ist, Bestimmen (S1E), dass
der RLF beim SUL-Träger und/oder Nicht-SUL-Träger auftritt; oder
wobei das Bestimmen, ob der RLF beim SUL-Träger der mit dem SUL-Träger konfigurierten Zelle auftritt und/oder ob der RLF beim Nicht-SUL-Träger auftritt, umfasst:
Bestimmen (S1F) eines mit einem PUCCH und einem PUSCH konfigurierten Trägers im SUL-Träger und Nicht-SUL-Träger;
Initiieren (S1G) eines wahlfreien Zugriffs auf den mit dem PUCCH und dem PUSCH konfigurierten Träger; und
als Reaktion darauf, dass der initiierte wahlfreie Zugriff auf den mit dem PUCCH und dem PUSCH konfigurierten Träger fehlgeschlagen ist, Bestimmen (S1H), dass der RLF beim SUL-Träger und/oder Nicht-SUL-Träger auftritt.

7. Vorrichtung zur Bestimmung eines Funkverbindungsstatus, wobei die Vorrichtung aufweist:
ein Bestimmungsmodul (1), das dazu ausgebildet ist, zu bestimmen, ob ein Funkverbindungsfehler, RLF, bei mindestens einem von einem Supplement Uplink-, SUL, Träger einer mit dem SUL-Träger konfigurierten Zelle und/oder einem Nicht-SUL-Träger auftritt; und
ein Verarbeitungsmodul (2), das dazu ausgebildet ist, als Reaktion auf den beim SUL-Träger und/oder Nicht-SUL-Träger auftretenden RLF zu bestimmen, dass der RLF bei der Zelle auftritt, und mindestens eines von Initiieren eines Verbindungswiederaufbauflusses oder Senden von Informationen des RLF an eine Basisstation darüber, ob die Zelle eine Primärzelle, PCell, oder eine Primär-Sekundärzelle, PSCell, ist, durchzuführen;
wobei das Verarbeitungsmodul (2) aufweist:
Existenzbestimmungs-Submodul (24), das dazu ausgebildet ist, als Reaktion auf den im SUL-Träger oder Nicht-SUL-Träger auftretenden RFL zu bestimmen, ob ein mit einem physikalischen Uplink-Steuerkanal, PUCCH, und einem gemeinsam genutzten physikalischen Uplink-Kanal, PUSCH, konfigurierter Träger in dem SUL-Träger und dem Nicht-SUL-Träger existiert;
ein Fehlerabgleichungs-Submodul (25), das dazu ausgebildet ist, als Reaktion darauf, dass der mit dem PUCCH und dem PUSCH konfigurierte Träger existiert, zu bestimmen, ob der Träger, bei dem der RLF auftritt, der mit PUCCH und dem PUSCH konfigurierte Träger ist;
ein Informationssende-Submodul (26), das dazu ausgebildet, als Reaktion darauf, dass der Träger, bei dem RLF auftritt, nicht der mit dem PUCCH und dem PUSCH konfigurierte Träger ist, die Informationen des RLF an die Basisstation zu senden, und als Reaktion darauf, dass der Träger, bei dem RFL auftritt, der mit dem PUCCH und dem PUSCH konfigurierte Träger ist, wenn die Zelle eine PSCell ist, die Informationen des RLF an die Basisstation zu senden; und
ein Verbindungswiederaufbau-Submodul (27), das dazu ausgebildet ist, als Reaktion darauf, dass der Träger, bei dem RLF auftritt, der mit dem PUCCH und dem PUSCH konfigurierte Träger ist, wenn die Zelle eine PCell ist, den Verbindungswiederaufbaufluss zur Basisstation zu initiieren.

8. Vorrichtung nach Anspruch 7, wobei das Bestimmungsmodul (1) aufweist:
ein Überwachungssubmodul (11), das dazu ausgebildet ist, eine Funkverbindungsüberwachung, RLM, beim SUL-Träger und/oder Nicht-SUL-Träger durchzuführen; und
ein Zahlensubmodul (12), das dazu ausgebildet ist, als Reaktion darauf, dass die kontinuierliche nicht synchrone Zahl des SUL-Trägers größer als eine oder gleich einer ersten Zahl ist, einen ersten Timer zu starten, und als Reaktion darauf, dass eine kontinuierliche synchrone Zahl des SUL-Trägers kleiner als eine zweite Zahl ist, bevor der erste Timer abläuft, zu bestimmen, dass der RLF beim SUL-Träger auftritt, und/oder
als Reaktion darauf, dass eine kontinuierliche nicht synchrone Zahl des Nicht-SUL-Trägers größer als eine oder gleich einer dritten Zahl ist, einen zweiten Timer zu starten, und als Reaktion darauf, dass eine kontinuierliche synchrone Zahl des Nicht-SUL-Trägers kleiner als eine vierte Zahl ist, bevor der zweite Timer abläuft, zu bestimmen, dass der RLF beim Nicht-SUL-Träger auftritt.

9. Vorrichtung nach Anspruch 8, wobei das Überwachungssubmodul (11) dazu ausgebildet ist, einen mit einem PUCCH konfigurierten Träger im SUL-Träger und Nicht-SUL-Träger zu bestimmen, und die RLM bei dem mit dem PUCCH konfigurierten Träger durchzuführen; oder
wobei das Überwachungssubmodul (11) dazu ausgebildet ist, einen mit einem PUCCH und einem PUSCH konfigurierten Träger im SUL-Träger und Nicht-SUL-Träger zu bestimmen, und die RLM bei dem mit dem PUCCH und dem PUSCH konfigurierten Träger durchzuführen.

10. Vorrichtung nach Anspruch 8, wobei als Reaktion darauf, dass die kontinuierliche synchrone Zahl des SUL-Trägers kleiner als die zweite Zahl ist, das Zahlensubmodul (12) ferner dazu ausgebildet ist, zu bestimmen, ob der SUL-Träger mit einem PUCCH konfiguriert ist, und als Reaktion darauf, dass der SUL-Träger mit dem PUCCH konfiguriert ist, zu bestimmen, dass der RLF beim SUL-Träger auftritt, und/oder
als Reaktion darauf, dass die kontinuierliche synchrone Zahl des Nicht-SUL-Trägers kleiner als die vierte Zahl ist, das Zahlensubmodul (12) ferner dazu ausgebildet ist, zu bestimmen, ob der Nicht-SUL-Träger mit dem PUCCH konfiguriert ist, und als Reaktion darauf, dass der Nicht-SUL-Träger mit dem PUCCH konfiguriert ist, zu bestimmen, dass der RLF beim Nicht-SUL-Träger auftritt

11. Vorrichtung nach Anspruch 8, wobei als Reaktion darauf, dass die kontinuierliche synchrone Zahl des SUL-Trägers kleiner als die zweite Zahl ist, das Zahlensubmodul (12) ferner dazu ausgebildet ist, zu bestimmen, ob der SUL-Träger mit einem PUCCH und einem PUSCH konfiguriert ist, und als Reaktion darauf, dass der SUL-Träger mit dem PUCCH und dem PUSCH konfiguriert ist, zu bestimmen, dass der RLF beim SUL-Träger auftritt, und/oder als Reaktion darauf, dass die kontinuierliche synchrone Zahl des Nicht-SUL-Trägers kleiner als die vierte Zahl ist, das Zahlensubmodul (12) ferner dazu ausgebildet ist, zu bestimmen, ob der Nicht-SUL-Träger mit dem PUCCH und dem PUSCH konfiguriert ist, und als Reaktion darauf, dass der Nicht-SUL-Träger mit dem PUCCH und dem PUSCH konfiguriert ist, zu bestimmen, dass der RLF beim Nicht-SUL-Träger auftritt.

12. Vorrichtung nach Anspruch 7, wobei das Bestimmungsmodul (1) aufweist:
ein Random-Access-Submodul (13), das dazu ausgebildet ist, einen wahlfreien Zugriff auf den SUL-Träger und den Nicht-SUL-Träger zu initiieren; und
ein Fehlerbestimmungs-Submodul (14), das dazu ausgebildet ist, als Reaktion darauf, dass der initiierte wahlfreie Zugriff auf den SUL-Träger fehlgeschlagen ist, zu bestimmen, dass der RLF beim SUL-Träger auftritt, und/oder als Reaktion darauf, dass der initiierte wahlfreie Zugriff auf den Nicht-SUL-Träger fehlgeschlagen ist, zu bestimmen, dass der RLF beim Nicht-SUL-Träger auftritt; oder
wobei das Bestimmungsmodul (1) aufweist:
ein Trägerbestimmungs-Submodul (15), das dazu ausgebildet ist, einen mit einem PUCCH konfigurierten Träger im SUL-Träger und Nicht-SUL-Träger zu bestimmen;
ein Random-Access-Submodul (16), das dazu ausgebildet ist, einen wahlfreien Zugriff auf den mit dem PUCCH konfigurierten Träger zu initiieren; und
ein Fehlerbestimmungs-Submodul (17), das dazu ausgebildet ist, als Reaktion darauf, dass der initiierte wahlfreie Zugriff auf den mit dem PUCCH konfigurierten Träger fehlgeschlagen ist, zu bestimmen, dass der RLF beim SUL-Träger und/oder Nicht-SUL-Träger auftritt; oder
wobei das Bestimmungsmodul (1) aufweist:
ein Trägerbestimmungs-Submodul (18), das dazu ausgebildet ist, einen mit einem PUCCH und einem PUSCH konfigurierten Träger im SUL-Träger und Nicht-SUL-Träger zu bestimmen;
ein Random-Access-Submodul (19) das dazu ausgebildet ist, einen wahlfreien Zugriff auf den mit dem PUCCH und dem PUSCH konfigurierten Träger zu initiieren; und
ein Fehlerbestimmungs-Submodul (10), das dazu ausgebildet ist, als Reaktion darauf, dass der initiierte wahlfreie Zugriff auf den mit dem PUCCH und dem PUSCH konfigurierten Träger fehlgeschlagen ist, zu bestimmen, dass der RLF beim SUL-Träger und/oder Nicht-SUL-Träger auftritt.

## Revendications

1. Procédé de détermination de l'état de liaison radio, le procédé comprend la détermination (S1) du fait de savoir si une défaillance de liaison radio, RLF, se produit sur une porteuse de liaison montante supplémentaire, SUL, d'une cellule configurée avec la porteuse SUL et/ou sur une porteuse non SUL ; et
en réponse à la RLF se produisant sur la porteuse SUL et/ou sur la porteuse non SUL, la détermination que la RLF se produit sur la cellule, et l'exécution (S2) du lancement d'un flux de rétablissement de connexion et/ou de la transmission d'informations de la RLF à une station de base en fonction de si la cellule est une cellule primaire, PCell, ou une cellule secondaire primaire, PSCell :
dans lequel l'exécution du lancement du flux de rétablissement de connexion et/ou de la transmission d'informations de la RLF à la station de base comprend :
en réponse à la RLF se produisant sur la porteuse SUL ou sur la porteuse non SUL, la détermination (S24) du fait de savoir si une porteuse configurée avec un canal de commande de liaison montante physique, PUCCH, et un canal partagé de liaison montante physique, PUSCH, existe dans la porteuse SUL et la porteuse non SUL ;
en réponse à la porteuse configurée avec le PUCCH et le PUSCH existant, la détermination (S25) du fait de savoir si la porteuse sur laquelle la RLF se produit est la porteuse configurée avec le PUCCH et le PUSCH ;
en réponse à la porteuse sur laquelle la RLF se produit n'étant pas la porteuse configurée avec le PUCCH et le PUSCH, la transmission (S26) des informations de la RLF à la station de base ; et
en réponse à la porteuse sur laquelle la RLF se produit étant la porteuse configurée avec le PUCCH et le PUSCH, dans le cas où la cellule est une PCell, le lancement (S27) du flux de rétablissement de connexion à la station de base, et dans le cas où la cellule est une PSCell, la transmission des informations de la RLF à la station de base.

2. Procédé selon la revendication 1, dans lequel la détermination du fait de savoir si la RLF se produit sur la porteuse SUL de la cellule configurée avec la porteuse SUL et/ou sur la porteuse non SUL comprend :
l'exécution (S11) d'une surveillance de liaison radio, RLM, sur la porteuse SUL et/ou sur la porteuse non SUL ;
en réponse à un nombre continu de désynchronisation de la porteuse SUL étant supérieur ou égal à un premier nombre, le démarrage (S12) d'un premier temporisateur, et en réponse à un nombre continu de synchronisation de la porteuse SUL étant inférieur à un deuxième nombre avant la fin du premier temporisateur, la détermination que la RLF se produit sur la porteuse SUL ; et/ou
en réponse à un nombre continu de désynchronisation de la porteuse non SUL étant supérieur ou égal à un troisième nombre, le démarrage (S13) d'un second temporisateur, et en réponse à un nombre continu de synchronisation de la porteuse non SUL étant inférieur à un quatrième nombre avant la fin du second temporisateur, la détermination que la RLF se produit sur la porteuse non SUL.

3. Procédé selon la revendication 2, dans lequel l'exécution de la RLM sur la porteuse SUL et/ou sur la porteuse non SUL comprend :
la détermination (S111) d'une porteuse configurée avec un PUCCH dans la porteuse SUL et de la porteuse non SUL ; et
l'exécution (S112) de la RLM sur la porteuse configuré avec le PUCCH ; ou
dans lequel l'exécution de la RLM sur la porteuse SUL et/ou sur la porteuse non SUL comprend :
la détermination (S113) d'une porteuse configurée avec un PUCCH et un PUSCH dans la porteuse SUL et la porteuse non SUL ; et
l'exécution (S114) de la RLM sur le porteuse configurée avec le PUCCH et le PUSCH.

4. Procédé selon la revendication 2, dans lequel, en réponse au nombre de synchronisation continue de la porteuse SUL étant inférieur au deuxième nombre, la détermination du fait de savoir si la RLF se produit sur la porteuse SUL de la cellule configurée avec la porteuse SUL et/ou du fait de savoir si la RLF se produit sur la porteuse non SUL comprend en outre :
la détermination (S14) du fait de savoir si la porteuse SUL est configurée avec un PUCCH, et
en réponse à la porteuse SUL configurée avec le PUCCH, la détermination (S15) que la RLF se produit sur la porteuse SUL ; et/ou
en réponse au nombre continu de synchronisation de la porteuse non SUL étant inférieur au quatrième nombre, la détermination du fait de savoir si la RLF se produit sur la porteuse SUL de la cellule configurée avec la porteuse SUL et/ou du fait de savoir si la RLF se produit sur la porteuse non SUL comprend en outre :
la détermination (S16) du fait de savoir si la porteuse non SUL est configurée avec le PUCCH, et
en réponse à la porteuse non SUL configurée avec le PUCCH, la détermination (S17) que la RLF se produit sur la porteuse non SUL.

5. Procédé selon la revendication 2, dans lequel, en réponse au nombre de synchronisation continue de la porteuse SUL étant inférieur au deuxième nombre, la détermination du fait de savoir si la RLF se produit sur la porteuse SUL de la cellule configurée avec la porteuse SUL et/ou du fait de savoir si la RLF se produit sur la porteuse non SUL comprend en outre :
la détermination (S14') du fait de savoir si la porteuse SUL est configurée avec un PUCCH et un PUSCH, et
en réponse à la porteuse SUL configurée avec le PUCCH et le PUSCH, la détermination (S15') que la RLF se produit sur la porteuse SUL ; et/ou
en réponse au nombre continu de synchronisation de la porteuse non SUL étant inférieur au quatrième nombre, la détermination du fait de savoir si la RLF se produit sur la porteuse SUL de la cellule configurée avec la porteuse SUL et/ou du fait de savoir si la RLF se produit sur la porteuse non SUL comprend en outre :
la détermination (S16') du fait de savoir si la porteuse non SUL est configurée avec le PUCCH et le PUSCH, et
en réponse à la porteuse non SUL configurée avec le PUCCH et le PUSCH, la détermination (S17') que la RLF se produit sur la porteuse non SUL.

6. Procédé selon la revendication 1, dans lequel la détermination du fait de savoir si la RLF se produit sur la porteuse SUL de la cellule configurée avec la porteuse SUL et/ou du fait de savoir si la RLF se produit sur la porteuse non SUL comprend :
le lancement (S1A) d'un accès aléatoire à la porteuse SUL et à la porteuse non SUL ; et
en réponse à l'échec de l'accès aléatoire initié à la porteuse SUL, la détermination (S1B) que la RLF se produit sur la porteuse SUL, et/ou, lorsque l'accès aléatoire initié à la porteuse non SUL échoue, la détermination que la RLF se produit sur la porteuse non SUL ; ou
dans lequel la détermination du fait de savoir si la RLF se produit sur la porteuse SUL de la cellule configurée avec la porteuse SUL et/ou du fait de savoir si la RLF se produit sur la porteuse non SUL comprend :
la détermination (S1C) d'une porteuse configurée avec un PUCCH dans la porteuse SUL et la porteuse non SUL ;
le lancement (S1D) d'un accès aléatoire à la porteuse configurée avec le PUCCH ; et
en réponse à l'échec de l'accès aléatoire initié à la porteuse configurée avec le PUCCH, la détermination (S1E) que la RLF se produit sur la porteuse SUL et/ou sur la porteuse non SUL; ou
dans lequel la détermination du fait de savoir si la RLF se produit sur la porteuse SUL de la cellule configurée avec la porteuse SUL et/ou du fait de savoir si la RLF se produit sur la porteuse non SUL comprend :
la détermination (S1F) d'une porteuse configurée avec un PUCCH et un PUSCH dans la porteuse SUL et la porteuse non SUL ;
le lancement (S1G) d'un accès aléatoire à la porteuse configurée avec le PUCCH et le PUSCH ; et
en réponse à l'échec de l'accès aléatoire initié à la porteuse configurée avec le PUCCH et le PUSCH, la détermination (S1H) que la RLF se produit sur la porteuse SUL et/ou sur la porteuse non SUL.

7. Dispositif de détermination de l'état de la liaison radio, le dispositif comprend :
un module de détermination (1), configuré pour déterminer si une défaillance de liaison radio, RLF, se produit sur une porteuse de liaison montante supplémentaire, SUL, d'une cellule configurée avec la porteuse SUL et/ou sur une porteuse non SUL ; et
un module de traitement (2), configuré pour, en réponse à la RLF se produisant sur la porteuse SUL et/ou sur la porteuse non SUL, déterminer que la RLF se produit sur la cellule, et exécuter le lancement d'un flux de rétablissement de connexion et/ou la transmission d'informations de la RLF à une station de base en fonction de si la cellule est une cellule primaire, Pcell, ou une cellule secondaire primaire, PSCell ;
dans lequel le module de traitement (2) comprend :
un sous-module de détermination d'existence (24), configuré pour, en réponse à la RLF se produisant sur la porteuse SUL ou la porteuse non SUL, déterminer si une porteuse configurée avec un canal de commande de liaison montante physique, PUCCH, et un canal partagé de liaison montante physique, PUSCH, existe dans la porteuse SUL et dans la porteuse non SUL ;
un sous-module de correspondance de défaillance (25), configuré pour, en réponse à la porteuse configurée avec le PUCCH et le PUSCH existant, déterminer si la porteuse sur laquelle se produit la RLF est la porteuse configurée avec le PUCCH et le PUSCH ;
un sous-module de transmission d'informations (26), configuré pour, en réponse à la porteuse sur laquelle la RLF se produit n'étant pas la porteuse configurée avec le PUCCH et le PUSCH, transmettre les informations de la RLF à la station de base, et en réponse à la porteuse sur laquelle la RLF se produit étant la porteuse configurée avec le PUCCH et le PUSCH, dans le cas où la cellule est une PSCell, transmettre les informations de la RLF à la station de base ; et un sous-module de rétablissement de connexion (27), configuré pour, en réponse à la porteuse sur laquelle se produit la RLF étant la porteuse configurée avec le PUCCH et le PUSCH, dans le cas où la cellule est une PCell, lancer le flux de rétablissement de connexion vers la station de base.

8. Dispositif selon la revendication 7, dans lequel le module de détermination (1) comprend :
un sous-module de surveillance (11), configuré pour effectuer une surveillance de liaison radio, RLM, sur la porteuse SUL et/ou sur la porteuse non SUL ; et
un sous-module de nombre (12), configuré pour, en réponse à un nombre continu de désynchronisation de la porteuse SUL étant supérieur ou égal à un premier nombre, démarrer un premier temporisateur, et en réponse à un nombre continu de synchronisation de la porteuse SUL étant inférieur à un deuxième nombre avant la fin du premier temporisateur, déterminer que la RLF se produit sur la porteuse SUL, et/ou
en réponse à un nombre continu de désynchronisation de la porteuse non SUL étant supérieur ou égal à un troisième nombre, démarrer un second temporisateur et en réponse à un nombre continu de synchronisation de la porteuse non SUL étant inférieur à un quatrième nombre avant la fin du second temporisateur, déterminer que la RLF se produit sur la porteuse non SUL.

9. Dispositif selon la revendication 8, dans lequel le sous-module de surveillance (11) est configuré pour déterminer une porteuse configurée avec un PUCCH dans la porteuse SUL et la porteuse non SUL, et exécuter la RLM sur la porteuse configurée avec le PUCCH; ou
dans lequel le sous-module de surveillance (11) est configuré pour déterminer une porteuse configurée avec un PUCCH et un PUSCH dans la porteuse SUL et la porteuse non SUL, et exécuter la RLM sur la porteuse configurée avec le PUCCH et le PUSCH.

10. Dispositif selon la revendication 8, dans lequel, en réponse au nombre de synchronisation continue de la porteuse SUL étant inférieur au deuxième nombre, le sous-module de nombre (12) est en outre configuré pour déterminer si la porteuse SUL est configurée avec un PUCCH, et en réponse à la porteuse SUL configurée avec le PUCCH, déterminer que la RLF se produit sur la porteuse SUL,
et/ou, en réponse au numéro de synchronisation continue de la porteuse non SUL étant inférieur au quatrième nombre, le sous-module de nombre (12) est en outre configuré pour déterminer si la porteuse non SUL est configurée avec le PUCCH, et en réponse à la porteuse non SUL configurée avec le PUCCH, déterminer que la RLF se produit sur la porteuse non SUL.

11. Dispositif selon la revendication 8, dans lequel, en réponse au nombre de synchronisation continue de la porteuse SUL étant inférieur au deuxième nombre, le sous-module de nombre (12) est en outre configuré pour déterminer si la porteuse SUL est configurée avec un PUCCH et un PUSCH, et en réponse à la porteuse SUL configurée avec le PUCCH et le PUSCH, déterminer que la RLF se produit sur la porteuse SUL, et/ou
en réponse au nombre continu de synchronisation de la porteuse non SUL étant inférieur au quatrième nombre, le sous-module de nombre (12) est en outre configuré pour déterminer si la porteuse non SUL est configurée avec le PUCCH et le PUSCH, et en réponse à la porteuse non SUL configurée avec le PUCCH et le PUSCH, déterminer que la RLF se produit sur la porteuse non SUL.

12. Dispositif selon la revendication 7, dans lequel le module de détermination (1) comprend :
un sous-module d'accès aléatoire (13), configuré pour lancer un accès aléatoire à la porteuse SUL et à la porteuse non SUL ; et
un sous-module de détermination de défaillance (14), configuré pour, en réponse à l'échec de l'accès aléatoire initié à la porteuse SUL, déterminer que la RLF se produit sur la porteuse SUL, et/ou, en réponse à l'échec de l'accès aléatoire initié à la porteuse non SUL, déterminer que la RLF se produit sur la porteuse non SUL ; ou
dans lequel le module de détermination (1) comprend :
un sous-module de détermination de porteuse (15), configuré pour déterminer une porteuse configurée avec un PUCCH dans la porteuse SUL et la porteuse non SUL;
un sous-module d'accès aléatoire (16), configuré pour lancer un accès aléatoire à la porteuse configurée avec le PUCCH ; et
un sous-module de détermination de défaillance (17), configuré pour, en réponse à l'échec de l'accès aléatoire initié à la porteuse configurée avec le PUCCH, déterminer que la RLF se produit sur la porteuse SUL ou sur la porteuse non SUL ; ou
dans lequel le module de détermination (1) comprend :
un sous-module de détermination de porteuse (18), configuré pour déterminer une porteuse configurée avec un PUCCH et un PUSCH dans la porteuse SUL et la porteuse non SUL ;
un sous-module d'accès aléatoire (19), configuré pour lancer un accès aléatoire à la porteuse configurée avec le PUCCH et le PUSCH ; et
un sous-module de détermination de défaillance (10), configuré pour, en réponse à l'échec de l'accès aléatoire initié à la porteuse configurée avec le PUCCH et le PUSCH, déterminer que la RLF se produit sur la porteuse SUL et/ou sur la porteuse non SUL.
